# EUROPEAN PATENT SPECIFICATION

(11) **EP 2 707 451 B1**
(45) Date of publication and mention of the grant of the patent: **25.03.2015**
(21) Application number: 12722703.1
(22) Date of filing: 10.05.2012
(51) Int. Cl.: C09K 8/34, C09K 8/36

(54) **METHOD OF CARRYING OUT A WELLBORE OPERATION**
VERFAHREN ZUM AUSFÜHREN EINES BOHRVORGANGS
PROCÉDÉ DE CONDUITE D'UNE OPÉRATION DE FORAGE

(30) Priority: 12.05.2011 EP 11250523
(43) Date of publication of application: 19.03.2014
(73) Proprietor: BP Exploration Operating Company Limited, Sunbury on Thames, Middlesex TW16 7BP (GB)
(72) Inventor: ASTON, Mark Shelton, Sunbury on Thames, Middlesex TW16 7LN (GB); GEORGE, Mary Ann, Cochin - 30, Kerala (IN); SAWDON, Christopher Alan, Par, Cornwall PL24 2HJ (GB)
(74) Representative: Wilson, Nicola Ann
(86) International application number: PCT/EP2012/058690
(87) International publication number: WO 2012/152889

(56) References cited:
- EP-A1- 1 889 858
- WO-A1-95/19408
- WO-A1-97/45625
- US-A- 4 776 966

## Description

This invention relates to a method of at least partly removing a barrier to fluid flow caused by a filter-cake deposited from a drilling mud on or in rock formations during drilling of a wellbore.

Conventionally, the drilling of a wellbore into the earth by rotary drilling techniques involves the circulation of a drilling mud from the surface of the earth down a drill string having a drill bit on the lower end thereof and through ports provided in the drill bit to the bottom of the wellbore and thence back to the surface through the annulus formed about the drill string. The drilling mud serves to cool the drill bit, to transport drill cuttings to the surface, and to stabilize the wellbore.

Known drilling muds can be assigned to one of the following classes: drilling muds based on oil (referred to herein as "oil-based muds", "OBM"s), that is, systems which are water-in-oil emulsions, often known as "invert emulsions", in which the aqueous phase (generally a brine) is distributed as a heterogeneous fine dispersion in a continuous oil phase; purely aqueous based drilling muds; and aqueous based drilling muds of the oil-in-water emulsion type. The present invention relates to oil-based systems having a brine phase dispersed in the continuous oil phase. Such OBMs also contain additional ingredients, for example water-in-oil emulsifiers, dispersed solid particles such as barite and calcium carbonate, and oil-wetting agents to maintain such particles in an oil-wet condition.

OBM's are required to exhibit filtration control, that is, control over the loss of fluid (filtrate) from the drilling mud that is present in the wellbore into the rock formations penetrated by the wellbore. In an OBM the filtration control is partly obtained from the very stable emulsion droplets that have a stable emulsifier "skin" to prevent their coalescence when concentrated together in a filter cake at high differential pressure and temperature. Over the years the drilling mud industry has developed and refined emulsifiers and combinations of emulsifiers that confer this stability to the emulsion droplets. Such emulsifiers also contribute to filtration control by forming robust inverse micelles in the oil phase, the inverse micelles having a hydrophilic core and a lipophilic shell. These micelles are much smaller than the emulsion droplets, and are stable enough to accumulate in the micropores in the filter-cake further restricting the flow of filtrate.

Wellbore fluids often contain polymers that perform various functions. For example, WO 2008/001049 discloses that significant improvement in fluid loss (i.e. reduced leakage of filtrate from the wellbore into the rock formation) can be obtained in aqueous based wellbore fluids by the use of a particular type of polymer in which the structure of the polymer has a particular combination of features, including the presence of sulfonate groups. WO 00/22009 further describes the use of such polymers as emulsion stabilisers in water-continuous emulsion polymerisation.

GB 2,309,240 discloses an OBM which contains a mixture of specific low molecular weight emulsifiers. In use, these emulsifiers stabilise the OBM, and drill cuttings resulting from drilling a well become coated with the stable water-in-oil emulsion. Treating the cuttings with a low salinity water causes the emulsion to break, facilitating clean-up of the cuttings.

US 6,822,039 discloses the use in wellbore fluids of certain polymers obtained by grafting n-alkylamines or di-n-alkylamines onto a hydrophilic polymer backbone. The stable water-in-oil emulsion obtained using these polymers can be destabilized or reversed to form an oil-in-water emulsion by adding fresh water, enabling the oil phase to be recovered for recycling, and drilling debris to be cleaned.

When drilling through a permeable rock formation such as a hydrocarbon producing formation or an interval intended for water injection (e.g. seawater injection), the hydrostatic pressure in the wellbore is maintained higher than the natural pressure of fluids contained within the permeable rock in order to prevent a flow of formation fluids into the wellbore. This differential pressure causes filtration of the drilling mud such that a substantially all-oil filtrate is forced into the permeable rock. For this reason, OBMs frequently contain dissolved or colloidally-dispersed polymers or resins such as gilsonite, blown asphalt, vinyl toluene/alkyl acrylate copolymers or amine-treated lignite, which act to reduce the filtration rate of the wellbore fluid (i.e. to reduce the fluid loss into the formation). Dispersed particles such as oil-wet barite are generally too large to enter the pores of the formation, and so they are deposited on the wellbore wall as a filter-cake.

The oil-wet particles pack together in the filter-cake under the applied differential pressure. Also, the strongly emulsified brine emulsion droplets become trapped in the pores between the solid particles. Because the brine is a non-wetting phase the droplets cannot be readily forced through the pore throats of the filter-cake, causing the permeability of the filter-cake to be very low. The filter-cake permeability is yet further reduced by the accumulation of dissolved or colloidally-dispersed polymers or resins sealing the pore passages. This very low permeability filter-cake is useful during drilling because it limits loss of filtrate to the formation, and avoids problems such as differential sticking of the drill-string.

Unfortunately the low permeability filter-cake can later form a barrier to the production of hydrocarbons from a hydrocarbon bearing formation or the injection of water into the hydrocarbon bearing formation, especially if the filter-cake becomes trapped between the formation and expanded screens or gravel packs that are commonly used to limit sand invasion into the wellbore. The problem is particularly acute in the case of water injection for two reasons. First, the injected water pressure forces the filter-cake onto the rock surface which can consolidate the seal (as opposed to a production well where filter-cake can often be lifted off the rock surface by the pressure of the fluids being produced). Secondly conventional OBM filter-cakes are persistently oil-wet which makes the penetration of water into and through the filter-cake very difficult.

Accordingly the industry has employed filter-cake treatment fluids pumped down the well in attempts to reverse the wettability and break the emulsion droplets contained in the filter-cake. Such "breaker" fluids can contain surfactants, co-solvents, micro-emulsions and acids aimed at opening up the permeability of the filter-cake. Attempts to provide breakable OBM filter-cakes have been made, for example US 6,790,811 describes the use of emulsifiers which can be protonated under acidic conditions. This is designed to make the filter-cake susceptible to acidic treatment fluids pumped into the well, reversing the emulsion and water-wetting the solids in the filter-cake, rendering it permeable.

Unfortunately such treatments are frequently inefficient. The very low permeability of OBM filter-cakes impedes the penetration of the breaker fluid. Often long "soak times" are required. Another problem is that if a portion of the filter-cake is quickly broken, the breaker fluid may then flow into the rock formation by-passing the rest of the filter-cake and leaving it untreated.

WO 2010/010325 relates to an OBM which initially forms a low permeability filter-cake, but where the permeability of the filter-cake spontaneously increases when the well is put onto production or onto water injection. This increase in permeability of the filter cake is achieved owing to the use of a polymeric emulsifier that is capable of stabilizing the water-in-oil emulsion under conditions of high salinity but not under conditions of low salinity such that the emulsion either breaks or inverts to form an oil-in-water emulsion when the OBM is contacted with a lower salinity aqueous based fluid. The polymeric emulsifier that is employed in WO 2010/010325 contains both hydrophilic units and hydrophobic units, at least some of said hydrophilic units containing sulfonate groups, and at least some of said hydrophobic units containing pendant alkyl groups having at least 8 carbon atoms, wherein the sulfonate groups have been introduced into the polymer by first preparing a precursor polymer containing units derived from at least one unsaturated carboxylic acid and/or anhydride and then reacting at least a portion of the carboxylic acid and/or anhydride groups of the precursor polymer with a compound of general formula R¹₂N(CH₂)ₙSO₃X (I) and/or a compound of general formula HO(CH₂)ₙSO₃X (II) wherein each R¹ is independently selected from hydrogen, methyl or ethyl, X is H, ammonium, or a Group IA metal, and n is an integer of from 1 to 6.

There remains a need for alternative OBMs which initially form low permeability filter-cakes, but where the permeability of the filter-cake increases when the well is put onto production or onto water injection.

Accordingly, in a first aspect of the present invention there is provided a drilling mud wherein the base fluid of the drilling mud is in the form of a water-in-oil emulsion comprising droplets of a brine phase dispersed in a continuous oil phase wherein the brine phase has a dissolved salt concentration of at least 2.5 weight % and the emulsion is stabilized with (i) a first polymeric emulsifier that is a block or graft copolymer of the general formula (A-COO)ₘB, wherein A and B represent polymeric components as defined below and m is an integer of at least 2; and (ii) a second polymeric emulsifier that is a graft copolymer of a polyvinylpyrrolidone polymer and an alphaolefin wherein the alphaolefin is selected from the group consisting of C₁₄ to C₂₀ alphaolefins and mixtures thereof and wherein structural units derived from vinylpyrrolidone are present in the graft copolymer in an amount in the range of 40 to 60 mole%.

In a second aspect of the present invention there is provided a method of carrying out a wellbore operation, which includes the steps of:
(a) drilling a wellbore through a hydrocarbon bearing reservoir using a drilling mud wherein the pressure of the drilling mud in the wellbore exceeds the reservoir pressure such that a filter-cake deposits from the drilling mud onto the wall of the wellbore and wherein the base fluid of the drilling mud is a water-in-oil emulsion comprising droplets of a brine phase dispersed in a continuous oil phase wherein the brine phase has a dissolved salt concentration of at least 2.5 % by weight and the emulsion is stabilized with (i) a first polymeric emulsifier that is a block or graft copolymer of the general formula (A-COO)ₘB, wherein A and B represent polymeric components as defined below and m is an integer of at least 2; and the second polymeric emulsifier is a graft copolymer of a polyvinylpyrrolidone polymer and an alphaolefin wherein the alphaolefin is selected from the group consisting of C₁₄ to C₂₀ alphaolefins and mixtures thereof and wherein structural units derived from vinylpyrrolidone are present in the graft copolymer in an amount in the range of 40 to 60 mole%; and, preferably,
(b) after completing drilling of the wellbore, bringing an aqueous fluid into contact with the filter-cake, said aqueous fluid having a dissolved salt concentration which is the same as or lower than the dissolved salt concentration of the dispersed brine phase of the drilling mud.

It has been found that when the water-in-oil emulsion utilized as the base fluid of the drilling mud is brought into contact with an aqueous fluid having a concentration of dissolved salt that is the same as or lower than the concentration of dissolved salt of the dispersed brine phase of the emulsion, the emulsion will either invert to form an oil-in-water emulsion or the emulsion will break such that the emulsion separates into its constituent oil and aqueous phases.

It has also been found that when the water-in-oil emulsion utilized as the base fluid of the drilling mud has a relatively high dissolved salt content in the dispersed brine phase, for example, a dissolved salt concentration of at least 5% by weight, preferably, at least 10% by weight, more preferably, at least 15% by weight, in particular, at least 20% by weight, that the emulsion inverts or breaks more rapidly when brought into contact with an aqueous fluid that has a relatively low dissolved salt concentration. Accordingly, it may be preferred that the base fluid of drilling mud used in step (a) of the method of the present invention comprises a water-in-oil emulsion where the dispersed brine phase has a relatively high dissolved solids concentration, and then, in step (b) of the method, the filter cake is contacted with an aqueous fluid having a relatively low dissolved salt concentration.

Preferably, once drilling of the wellbore has been completed in step (a) and a filter-cake has formed, the drilling mud is displaced by a completion fluid having a sufficient dissolved solids content that the filter-cake seal is not broken; well-completion equipment (for example, a well liner or sandscreen for stabilising the formation) is installed; and finally the aqueous fluid of the same or lower salinity than the dispersed brine phase of the drilling mud, for example seawater, is brought into contact with the filter-cake.

Typically, the completion fluid should have a higher concentration of dissolved salts than the dispersed brine phase of the water-in-oil emulsion thereby mitigating the risk of premature destabilization of the emulsion droplets trapped in the filter cake. Preferably, the completion fluid has a dissolved salt concentration that is at least 2% by weight higher than the dissolved salt concentration of the dispersed brine phase of the water-in-oil emulsion. The aqueous fluid having a dissolved salt concentration that is the same as or lower than the dissolved salt concentration of the dispersed brine phase of the water-in-oil emulsion may be injected into the well such that it displaces the completion fluid from the wellbore. Such a process is particularly useful in a water injection well, but may also be used in a production well. In addition, where the formation water of the hydrocarbon-bearing reservoir is of the same or lower salinity than the dispersed brine phase of the emulsion, a production well may simply be brought onto production thereby destabilizing the emulsion droplets in the filter-cake and displacing the completion fluid from the wellbore. Contact with the aqueous fluid may be by a process of permeation. In the case of a lower salinity aqueous fluid, contact with the aqueous fluid may also be by a process of osmosis, causing the filter-cake to swell and resulting in a decrease in the salinity of the brine droplets. These processes of permeation and/or osmosis cause the emulsion droplets that are trapped in the filter cake to become unstable and break. This can allow aqueous fluid to flow through the pore network between the particles of the filter-cake, facilitating fluid communication between the wellbore and the rock formations of the reservoir.

The aqueous fluid which is used in step (b) of the process of the invention may be fresh water or an aqueous brine, or an oil-in-water emulsion. It may, for example, be seawater, produced water (water that is separated from the hydrocarbons that are produced from the reservoir), aquifer water, brackish water such as estuarine water, desalinated water, river water, lake water or mixtures thereof. The aqueous fluid used in step (b) may be injected into the wellbore or may be water that is produced from a formation that is penetrated by the wellbore (produced water). The method of the present invention is particularly effective in gas-producing wells owing to expansion of the gas at the reduced pressure encountered near the production wellbore. The associated adiabatic cooling of the gas results in condensation of low salinity water from the water-saturated gas phase. This condensed water can be used to advantage in the process of the invention. Alternatively an aqueous clean-up fluid, preferably, a clean-up fluid of lower salinity than the dispersed brine phase of the water-in-oil emulsion that is utilized as the base fluid of drilling mud is pumped into the well. The aqueous clean-up fluid may optionally contain additives designed to assist clean-up of the filter cake, for example, acids, surfactants, and co-solvents

The first polymeric emulsifier is a block or graft co-polymer of the general formula (A-COO)ₘB, wherein m in an integer of at least 2, A is a polymeric component having a molecular weight of at least 500 and is the residue of an oil-soluble complex mono-carboxylic acid of the general structural formula:

R-CO-[O-CHR₁-(R₂)ₙCO]ₚ-O-CHR₁-(R₂)ₙ-COOH (I)

in which R is hydrogen or a monovalent hydrocarbon or substituted hydrocarbon group; R₁ is hydrogen or a monovalent C₁ to C₂₄ hydrocarbon group; R₂ is a divalent C₁ to C₂₄ hydrocarbon group; n is zero or 1; and p is zero or an integer from zero up to 200; and B is a polymeric component having a molecular weight of at least 500 and, in the case where m is 2, is the divalent residue of a water-soluble polyalkylene glycol of the general formula:

H-[O-CHR₃-CH₂]_{q}-O-CHR₃-CH₂OH (II)

in which R₃ is hydrogen or a C₁ to C₃ alkyl group, q is an integer from 10 to 500, or, in the case where m is greater than 2, is the residue of valency m of a water-soluble polyether polyol of the general formula:

R₄{[O-CHR₃-CH₂]ᵣ-OH}ₘ (III)

in which R₃ and m have their previous significance, r is zero or an integer from 1 to 500, provided that the total number of:

-O-CHR₃-CH₂-

units in the molecule is at least 10, and R₄ is the residue of an organic compound containing in the molecule m hydrogen atoms reactive with an alkylene oxide.

Preferred block or graft copolymers are those in which m in the above formula (I) has a value of 2 and/or the water-soluble polyalkylene glycol from which the polymeric component B is derived is a polyethylene glycol of molecular weight in the range of 1000-4000. It is further preferred that the copolymer should contain from 20 to 50% by weight, especially from 30 to 45% by weight, of the polyethylene glycol-derived polymeric component B. In particular, the first polymeric emulsifier may be a block copolymer in which each 'A' component is the residue of a poly(12-hydroxystearic acid) chain-terminated with stearic acid and in which each 'B' component is derived from a polyethylene glycol. This copolymer may be produced by self-condensation of commercial 12-hydroxystearic acid (which already contains a proportion of stearic acid that can function as chain terminator), followed by reaction of the production with the polyethylene glycol in the presence of an esterification catalyst.

Preferred first polymeric emulsifiers are those sold under the trademark "Hypermer" produced by Croda Europe Limited (for example, Hypermer B206, Hypermer B210, Hypermer B246, and Hypermer B261, in particular Hypermer B261. These polymeric emulsifiers are described in GB 2,051,124A, US 4,504,276, US 4,509,950 and US 4,776,966.

Hypermer B206 is a block copolymer of a poly(12-hydroxystearic acid) and poly(ethylene oxide) (also known as polyethylene glycol) and has a molecular weight of about 2500.

Hypermer B210 is a block copolymer of a poly(12-hydroxystearic acid) and poly(ethylene oxide) (also known as polyethylene glycol) and has a molecular weight of about 1500.

Hypermer B246 is a block copolymer of a poly(12-hydroxystearic acid) and poly(ethylene oxide) (also known as polyethylene glycol) and has a molecular weight of about 7500.

Hypermer B261 is a block copolymer of a poly(12-hydroxystearic acid) and poly(ethylene oxide) and has a molecular weight of about 9600.

Suitably, the hydrophile-lipophile balance (HLB) value of the first polymeric emulsifier is in the range of 3 to 9, preferably, 5 to 9, more preferably, 7 to 9, in particular, 8 (HLB is a well-known scale that characterizes emulsifiers).

Hypermer B206 has an HLB value in the range of 3 to 4.

Hypermer B210 has an HLB value in the range of 4 to 5.

Hypermer B246 has an HLB value in the range of 5 to 6.

Hypermer B261 has an HLB value of approximately 8.

Suitably, the first polymeric emulsifier may be a liquid or a waxy solid. If necessary, the first polymeric emulsifier may be heated to melt the emulsifier, for example, Hypermer B261 has a melting point of approximately 45°C. Alternatively, the first polymeric emulsifier may be dissolved in a suitable hydrocarbon liquid (for example, an aromatic hydrocarbon such as toluene or xylene, an aliphatic oil, or a mutual solvent such as ethylene glycol monobutyl ether) and the resulting solution of polymeric emulsifier may be used to prepare the water-in-oil emulsion. Preferably, the amount of polymeric emulsifier in the solution is in the range 5 to 50 wt%.

The concentration of the first polymeric emulsifier in the base fluid (water-in-oil emulsion) of the drilling mud may be from 0.1 to 10% by weight based on the combined oil and aqueous phases of the emulsion (i.e. prior to adding any weighting agents or other constituents to the base fluid to form the drilling mud). However, for economic reasons, it is preferred that a relatively low content of first polymeric emulsifier is used. For example, the content of the first polymeric emulsifier may be for example from 0.5 to 5 percent by weight, for example, 1 to 4 percent by weight of the emulsion.

If desired, two or more of the defined first polymeric emulsifiers may be used to stabilize the water-in-oil emulsion.

The second polymeric emulsifier is a graft copolymer of a polyvinyl pyrrolidone (also known as poly(1-ethenylpyrrolidin-2-one) and an alphaolefin wherein the alphaolefin is selected from a C₁₄ to C₂₀ alphaolefin and mixtures thereof and wherein structural units derived from vinylpyrrolidone are present in the graft copolymer in an amount in the range of 40 to 60 mole%.

Preferably, the HLB value of the second polymeric emulsifier is in the range of 8 to 12. The HLB value for the second polymeric emulsifier is correlated with the mole% of structural units derived from vinylpyrrolidone (and hence the % alkylation of the graft copolymer), the chain length of the alkyl group and the molecular weight of the graft copolymer.

Preferably, the mole% of structural units derived from vinylpyrrolidone in the second polymeric emulsifier is in the range of 45 to 55 mole%.

Preferably, the alphaolefin that is grafted onto the polyvinyl pyrrolidone polymer is selected from the group consisting of tetradec-1-ene, hexadec-1-ene, octadec-1-ene and eicosene, in particular, hexadec-1-ene.

Preferably, the molecular weight of the second polymeric emulsifier is in the range of 2,000 to 12,000, preferably, 3000 to 10,000.

The second polymeric emulsifier may be supplied in the form of a viscous liquid or a waxy solid or powder (depending upon its melting point). If necessary, the second polymeric emulsifier may be heated to melt the emulsifier. Alternatively, the second polymeric emulsifier may be supplied as a solution in an organic solvent and the resulting solution of polymeric emulsifier may be used to prepare the water-in-oil emulsion. The organic solvent may be an alcohol such as isopropanol or an aromatic solvent such as toluene or xylene. Preferably, the amount of polymeric emulsifier in the solution is in the range 30 to 70 % by weight.

A commercial source of alkylated vinylpyrrolidone polymers are the Agrimer® AL polymers supplied by International Specialty Polymers (ISP). A preferred polymer in the Agrimer® AL series is Agrimer® AL 25. Agrimer® AL 25 is a graft copolymer of a polyvinylpyrrolidone and hexadec-1-ene containing 50 mole% of structural units derived from vinyl pyrrolidone and having a molecular weight of 9500. This preferred second polymeric emulsifier has an estimated HLB value in the range of 9 to 11. Agrimer® AL 25 is supplied in the form of a solution in isopropanol having a polymer concentration of 55% by weight. However, Agrimer® AL 25 may also be supplied in other forms such as a solid grade or as a solution in an alternative solvent such as ethylene glycol monobutyl ether or dipropylene glycol monomethyl ether.

The concentration of the second polymeric emulsifier in the base fluid of drilling mud may be from 0.1 to 10% by weight based on the combined oil and aqueous phases of the emulsion (i.e. prior to adding any weighting agents or other constituents to the base fluid to form the drilling mud). It is preferred that a relatively low content of second polymeric emulsifier is used. For example, the content of the second polymeric emulsifier may be for example from 0.1 to 5 percent by weight, preferably 0.1 to 1 percent by weight, for example, 0.2 to 0.8 percent by weight of the emulsion.

If desired, two or more of the defined second polymeric emulsifiers may be used to stabilize the water-in-oil emulsion.

Preferably, the weight ratio of first polymeric emulsifier to second polymeric emulsifier in the emulsion that forms the base fluid of the drilling mud may be in the range of 10:1 to 1:3, preferably 8:1 to 1:1.

The continuous oil phase in a drilling mud of the invention can be any of the known base oils used or proposed for use in oil-based muds. These include crude oil; hydrocarbon fractions refined from crude oil such as diesel fuel or mineral oil; synthetic hydrocarbons such as n-paraffins, alpha-olefins, internal olefins, and poly-alphaolefins; synthetic liquids such as non-polar dialkyl ethers, alkyl alkanoate esters, and acetals; natural oils such as triglycerides including rape-seed oil and sunflower oil; or any mixture of these. Low toxicity and highly biodegradable oils are generally preferred.

Suitable esters include esters of unsaturated fatty acids and saturated fatty acids as disclosed in EP 0374671A and EP 0374672 respectively; esters of neo-acids as described in WO 93/23491; oleophilic carbonic acid diesters having a solubility of at most 1% by weight in water (as disclosed in US 5,461,028); triglyceride ester oils such as rapeseed oil (see US 4,631,136 and WO 95/26386). Suitable acetals are described in WO 93/16145. Suitable synthetic hydrocarbons include polyalphaolefins (see, for example, EP 0325466A, EP 0449257A, WO 94/16030 and WO 95/09215); linear alpha-olefins as disclosed in US 5,627,143; isomerized linear olefins (see EP 0627481A, US 5,627,143, US 5,432,152 and WO 95/21225); n-paraffins, in particular n-alkanes (see, for example, US 4,508,628 and US 5,846,913); linear alkyl benzenes and alkylated cycloalkyl fluids (see GB 2,258,258 and GB 2,287,049 respectively). Suitable ethers include those described in EP 0391251A (ether-based fluids) and US 5,990,050 (partially water-soluble glycol ethers). Suitable alcohols include oleophilic alcohol-based fluids as disclosed in EP 0391252A.

In the OBM, the brine phase is for example dispersed in the continuous oil phase in an amount of from 10 to 60% by volume , preferably 20 to 50% by volume, based on the total volume of the aqueous and oil phases. Generally, the brine phase is distributed in the oil phase in the form of finely divided droplets.

Mechanical mixing equipment or blenders may be used to impart the desired shear to a mixture of the oil phase, brine phase and first and second emulsifiers to achieve the water-in-oil emulsion. Stirring rate and times should be designed to form small aqueous droplets having average diameters of from about 0.01 to about 100 microns and preferably from about 0.1 to about 10 microns.

The dispersed brine phase may, for example, be a synthetic brine containing one or more salts. Suitable salts include alkali metal halides, alkali metal carbonates, alkali metal sulphates, alkali metal formates, alkali metal acetates, alkali metal phosphates, alkali metal silicates, alkaline earth metal halides, and zinc halides. The salt may be present in the aqueous solution at concentrations up to saturation. Preferably, the salt in the brine phase is present at a concentration in the range of at least 10% by weight, for example 10 to 40% or more by weight (the upper limit being determined only by the solubility of the relevant salt(s)), preferably at least 25% by weight, for example at least 30% by weight, based on the total weight of the brine.

The wellbore fluid may further contain any appropriate oil-based wellbore fluid additives such as wetting agents; deflocculants; clays; organoclay or polymeric viscosifiers; filtration reducers such as lignite derivatives, asphalts, asphaltites such as gilsonite or polymers dissolved or colloidally dispersed in the oil phase of the water-in-oil emulsion; weighting agents such as finely divided barium sulfate (barite), calcium carbonate (calcite), the mixed carbonate of calcium and magnesium (dolomite), hematite, haussmanite, and mixtures thereof; and lubricating additives; or any other functional additive known to those skilled in the art.

The quantity of auxiliary substances and additives used in each case preferably lie within the usual boundaries for a drilling mud.

Preferably, a bridging particulate material is added to a wellbore fluid of the present invention. Bridging agents are composed of solid particles whose particle size is such that they will not appreciably intrude into a porous and permeable rock formation such as sandstone. In the wellbore wall there are exposed entrances to pores or fissures in which the bridging particles "log-jam" and start to build a filter-cake. The permeability of the rock matrix or fissures is thus protected from plugging by invaded materials.

Suitably, the bridging particulate material is sized so as not to enter the pores or fissures of any permeable rock through which the wellbore passes. Typically, the bridging material has an average particle diameter in the range 15 to 2000 microns. The size chosen depends upon the particular operation in which the wellbore fluid is being employed and the size of the pores, fractures or other conduits in the rock formation. Preferably, the bridging material has a broad (polydisperse) particle size distribution.

Typical bridging particulate material comprises at least one substantially crush resistant particulate solid, for example calcium carbonate, magnesium carbonate or dolomite (a mixed carbonate of calcium and magnesium). However, because this invention concerns filter-cakes that are at least partly removed or made permeable by the application of relatively low salinity water, it is preferred that the bridging particles have at least some water-solubility. The use in oil-based drilling and completion fluids of suspended salt particles such as sodium chloride is known (referred to as "sized-salt"). In contrast to conventional OBM fluids containing salt particles, the facile initiation of the flow of low salinity water through filter-cakes from the OBM of this invention can provide an improvement in the rate and degree of salt particle removal by low salinity water. Further, aspects of this invention are also well-suited to be applied in conjunction with sparingly water-soluble bridging solids such as are described in WO 2007/088322. The sparingly soluble bridging solids are particles of melamine, lithium carbonate, magnesium sulfite or lithium phosphate. They have the advantage over suspended sodium chloride fluids that they are less prone to suffer premature failure of the filter-cake and losses of the wellbore fluid to the formation.

Similarly, for acid-soluble bridging particles such as calcium carbonate, magnesium carbonate or dolomite, the increase in permeability of a filter-cake in the relatively low salinity fluid (e.g. seawater) can increase the effectiveness of a subsequent clean-up with an acid solution. The sparingly soluble bridging agents of WO 2007/088322 are also readily soluble in mild acid solutions.

The aqueous fluid used in step (b) of the process of the invention is preferably a lower salinity fluid such as fresh water or brackish water or a relatively low salinity brine, including seawater. In many applications, it is preferably seawater. It is preferably sufficiently low in salt content to cause rapid destabilisation of the OBM. Preferably, the content of salts in the lower salinity fluid is at least 4% by weight lower in dissolved salt content than the dispersed brine phase OBM. The lower salinity fluid preferably contains less than 6%, preferably less than 4%, by weight of dissolved salts.

The concentration of salt(s) in the dispersed brine phase of the OBM may be at least twice, preferably at least four times, the concentration of salts in the lower salinity aqueous fluid. Thus, in the case of a water injection well where the lower salinity aqueous fluid is injected seawater (typically containing about 3.5% by weight dissolved salts) which assumes the role of a clean-up fluid, the dispersed brine phase of the drilling mud may for example contain at least 15% by weight total dissolved salts.

Choice of salts allows a broad range of specific gravity and salt concentration. Some examples are shown in the following Table. The concentrations and specific gravities are approximate and refer to ambient temperature.

| SALT | %w/w at saturation | Approximate specific gravity of saturated solution at ambient temperature |
|---|---|---|
| KCl | 24 | 1.16 |
| NaCl | 26 | 1.20 |
| CaCl2 | 40 | 1.40 |
| NaBr | 48 | 1.53 |
| potassium carbonate | 50 | 1.54 |
| potassium formate | 75 | 1.57 |
| caesium formate | 83 | 2.3 |

The following Examples illustrate the invention.

The following US to metric unit conversion factors were used in the Examples:
1 US gallon (gal) = 3.785 litres
1 lb = 0.454 kg
1 lb/gal (ppg) = 0.1198 g/cm³
1 barrel (bbl) = 42 gal
1 lb /bbl (ppb) = 2.835kg/m³
1 lb/100ft² = 0.4788 Pascal (Pa)
1 lb/sq.in. (psi) = 6.895 x 10³ Pa

The seawater used in all the examples was synthetic seawater approximating to that from the North Sea of about 3.5% by weight total dissolved salts. It was prepared using the Seawater Corrosion Test Mixture kit (Product No. 331533P) conforming to DEF1053/B.S.3900/B.S.2011, available from VWR International Ltd., Poole, Dorset, UK.

The following polymeric emulsifiers were tested:-
Hypermer™ B206 (supplied by Croda Europe Limited); HLB value in the range of 3 to 4.
Hypermer™ B210 (supplied by Croda Europe Limited) HLB value in the range of 4 to 5.
Hypermer™ B261 (supplied by Croda Europe Limited); supplied in approximately 100% active form; HLB value of about 8.
Agrimer® AL-25 (supplied by International Specialty Products); Poly(1-Ethenylpyrrolidin-2-one/Hexadec-1-ene); supplied as a 55% active solution in isopropanol; HLB value of about 9-11.

### Emulsifier Evaluation Method

Using the polymeric emulsifiers listed above, simple brine and oil emulsions were prepared using 164g Clairsol 370 (Trade Mark) mineral oil (a product of Petrochem Carless Ltd) and 170g of a dense (specific gravity = 1.4) saturated CaCl₂ brine (40% by weight). Thus, the oil to brine weight ratio was 49:51, which corresponds to a volumetric ratio of approximately 63:37. The polymeric emulsifiers were added at differing dosages as outlined in Tables 1 and 2 below. The emulsions were prepared using a Silverson L4RT (Trade Mark) mixer fitted with an "Emulsor" head at a stirring rate of 5,700 rpm for 30 minutes. To these simple emulsions were added:
Geltone II, 5.67 kg/m³ (2 ppb), - an organophilic clay (viscosifier) supplied by Halliburton;
Adapta HP, 4.25 kg/m³ (1.5 ppb), - a polymeric fluid loss reducer, typically used in oil based drilling muds, supplied by Halliburton;
Baracarb 25, 56.7 k/cm³ (20 ppb), - a powdered calcium carbonate bridging solid with average particle size approximately 25 microns, supplied by Halliburton.

The resulting drilling muds were then tested for their rheological properties, electrical stability (ES), and their fluid loss (filtration) values.

The tendency of the drilling mud to gel and its ability to flow were characterised by measuring the following rheological parameters using a rheometer:
Plastic viscosity (PV). The plastic viscosity is the difference between the viscosity of the drilling mud when sheared at a rotational speed of 600 rpm and its viscosity when sheared at a rotational speed of 300 rpm (rpm = rotational speed in revolutions per minute). The viscosities are measured using a standard oil field rheometer.
Yield Point (YP). This is the viscosity of the drilling mud when sheared at a rotational speed of 600 rpm minus the PV.
10 sec gel and 10 minute gel refer to the instantaneous viscosities (measured using a standard oil field rheometer) at a rotational speed of 3 rpm, after the fluid has been sheared at a rotational speed of 600 rpm and has been allowed to rest for 10 seconds and 10 minutes respectively.

The emulsions were then tested for their ability to invert or "flip" to an oil-in-water emulsion or to separate into its oil and brine phases when the emulsion is mixed with lower salinity water. This test consisted of adding 1 ml of the drilling mud to 9 ml of seawater (a lower salinity aqueous fluid) in a vial, shaking the vial by hand, and noting changes in the appearance of the fluid. The desired effect is a rapid inversion of the water-in-oil emulsion to an oil-in-water emulsion or a rapid separation of the oil and water phases. A drilling mud with good flippability should readily disperse in the seawater to give a cloudy white fluid as opposed to poor flippablity drilling muds which remain as relatively large visible mud droplets in the seawater or form an oily coating on the surface or on the sides of the container. Good flippability drilling muds give little or no oily skin on the surface or sides of the vial.

The fluid loss (filtration behaviour) of the water-in-oil emulsions were determined at high temperature and high pressure (HTHP Fluid Loss), in accordance with the specifications of the American Petroleum Institute (API) guidelines "Recommended Practice for Field Testing of Oil-Based Drilling Fluids", API RP 13B-2, Fourth Edition 2005. The HTHP Fluid Loss test employs a pressurized cell fitted with a standard hardened filter paper. Tests were also carried out using an Aloxite (aluminium oxide) sintered disc with average pore size 10 microns. as a filtration medium. The filtration area is 7.1 square inches (0.0045 m²) or may be smaller. If smaller, the result reported is corrected to a filter area of 7.1 square inches. For instance the filtrate volume using a 3.55 square inches (0.0023 m²) filter area is doubled to provide the corrected result. Generally, the filtration behaviour of the wellbore fluid in the HTHP test is determined with a pressure differential across the filter paper of 500 psi (3.45 x 10⁶ Pa). Suitably, the temperature at which the HTHP fluid loss test is carried out may be varied to correspond to the downhole temperature. Generally, the test temperature is in the range 50 to 150°C. A filter-cake is allowed to build up on the filter paper for 30 minutes and the volume of filtrate collected during this 30 minute period is then recorded.

The electrical stability (ES) of the drilling muds was determined by inserting a probe into the fluid. This probe comprised two spaced apart electrodes and was connected to an electrical stability (ES) meter. The ES meter automatically applies an increasing voltage (from 0 to 2000 volts) across the gap between the electrodes of the probe. The emulsion stability (ES) voltage is the maximum voltage that the drilling mud will sustain across the gap between the electrodes before a current is displayed on the ES meter (current flows when the emulsion breaks). As a general rule, the ES voltage value increases with increasing emulsion stability.

A seawater (SW) breakthrough test was also performed. This test made use of the filter cake that formed in the fluid loss tests, after removal of any unfiltered suspension remaining on top of the filter cake. Seawater was placed in contact with the filter cake and a pressure of 3.45 x 10⁵ Pa (50 psi) was applied. The time taken to collect 50 g of seawater filtrate was determined. A short seawater breakthrough time shows that the filter cake has become water-wet and will be more readily removed from a formation when contacted with a lower salinity aqueous fluid.

**Table 1: Hypermer B261/Agrimer AL25 Combinations**

| **Formulation Number** | **Base formulation- Clairsol 370/CaCl2 brine 60:40 5.27 kg/m³ (2ppb) Geltone II + 4.25 kg/m³ (1.5ppb) Adapta HP + 20 Baracarb 25** | **PV, Pa. s (centipoise)** | **YP, Pa** (lb/100 sq ft) | **10 sec Gel, Pa** (lb/100 sq ft.) | **10min Gel, Pa** (lb/100 sq ft) | **HTHPFL** | **HTHP FL** | **ES** | **SW breakthrough** | **Flippability** |
|---|---|---|---|---|---|---|---|---|---|---|
| | | | | | | **(paper)** | **10µm disc** | | **hrs** | |
| 1 (Comparative) | 22.68 kg/m³ (8 ppb) Hypermer B261 | 0.033 (33) | 17.24 (36) | 4.79 (10) | 4.79 (10) | 2.8 | 5.4 | 164 | 2.9 | fair |
| 2 (Comparative) | 22.68 kg/m³ (8 ppb) Agrimer AL25 | 0.023 (23) | 7.18 (15) | 1.44 (3) | 3.83 (8) | 3.2 | 7.9 | 83 | 1.2 | good |
| 3 | 14.18 kg/m³ (5 ppb) Hypermer B261 + 14.18 kg/m³ (5 ppb) Agrimer AL25 | 0.028 (28) | 4.31 (9) | 1.92 (4) | 2.39 (5) | 1.6 | 5.4 | 249 | 0.7 | good |
| 4 | 17.01 kg/m³ (6 ppb) Hypermer B261 + 17.01 kg/m³ (6 ppb) Agrimer AL25 | 0.024 (24) | 3.35 (7) | 1.44 (3) | 1.92 (4) | 1.6 | 4 | 156 | 1.2 | good |
| 5 | 17.01 kg/m³ (6 ppb) Hypermer B261 + 11.34 kg/m³ (4 ppb) Agrimer AL25 | 0.024 (24) | 4.79 (10) | 2.39 (5) | 3.35 (7) | 1.2 | 3.9 | 316 | 0.9 | good |
| 6 | 17.01 kg/m³ (6 ppb) Hypermer B261 + 8.51 kg/m³ (3 ppb) Agrimer AL25 | 0.024 (24) | 3.35 (7) | 1.92 (4) | 2.39 (5) | 0.4 | 2.4 | 337 | 0.2 | good |
| 7 | 17.01 kg/m³ (6 ppb) Hypermer B261 + 5.67 kg/m³ (2 ppb) Agrimer AL25 | 0.025 (25) | 4.31 (9) | 1.44 (3) | 1.44 (3) | 3.2 | 4 | 296 | 1.9 | good |
| 8 | 14.18 kg/m³ (5 ppb) Hypermer B261 + 2.835 kg/m (1 ppb) Agrimer AL25 | 0.038 (38) | 11.97 (25) | 3.83 (8) | 5.75 (12) | | 3.5 | 163 | 0.7 | good |
| 9 (Comparative) | A conventional low solids Oil Based Mud (80/20 oil to water ratio). | - | - | - | - | - | - | 353 | >3 hours | very poor |

The quantities of polymeric emulsifiers given in Table 1 refer to the materials as supplied by the manufacturers (see above).

The results presented in Table 1 suggests that there is a synergistic effect when combinations of the first and second polymeric emulsifiers (Hypermer™ B261 and Agrimer™ AL 25 respectively) are used to stabilize the emulsion that forms the base fluid of the drilling mud.
Formulation 1: The base emulsion of this formulation was stabilized with a single polymeric emulsifier (Hypermer™ B261). The drilling mud formulation was found to have an unacceptably long seawater breakthrough time, and was slightly oily on inverting into an oil-in-water emulsion.
Formulation 2: The base emulsion of this formulation was stabilizised using a single polymeric emulsifier (Agrimer® AL 25). The drilling mud formulation showed poor stability (low ES value).
Formulations 3 to 8: The base emulsions of these formulations were stabilized using combinations of Hypermer™ B261 and Agrimer® AL 25. The drilling mud formulations showed an overall better performance that satisfied all test requirements (when compared with Formulations 1 and 2).
Formulation 6: This had the best performance of those formulations tested.
Formulation 9: This is a conventional low-solids oil based mud that did not invert during the flippability test. This mud also showed a high seawater breakthrough time compared with the formulations of the present invention The composition of Formulation 9 is given below:

| Carbosea™ OBM supplied by Baker Hughes Drilling Fluids | |
|---|---|
| Composition | Weight in g |
| Base Oil (Clairsol NS) | 148 |
| Emulsifier (OMNI-MUL™) | 15 |
| Viscosifier (CARBO-GEL™) | 10.5 |
| Fluid Loss Additive (MAGMA-TROL™) | 2.0 |
| Fluid Loss Additive (FL 1790) | 4.00 |
| Cesium formate brine | 236 |
| Calcium Carbonate bridging solids | 20 |
| (FLOW-CARB™ 5) | |
| Oil/Water ratio | 70/30 |
| Density of mud (sg) | 1.25 |

The total concentration of Hypermer™ B261 and Agrimer® AL25 (as supplied) was in the range 17.01 to 34.02 kg/m³ (6 to 12 ppb) for the Formulations presented in Table 1. However, lower or higher total concentrations may be acceptable. The ratio of Hypermer™ B261 to Agrimer® AL25 was in the range 5:1 to 1:1 by weight based on "as-supplied" material which is equivalent to a range of 9:1 to 1.8:1 by weight of active material. As discussed above, a preferred range for the ratio of Hypermer™ B261 to Agrimer® AL25 is 8:1 to 1:1 by weight active material.

## Claims

1. A drilling mud comprising a base fluid in the form of a water-in-oil emulsion comprising droplets of a brine phase dispersed in a continuous oil phase wherein the brine phase has a dissolved salt concentration of at least 2.5 weight % and the emulsion is stabilized with (i) a first polymeric emulsifier that is a block or graft copolymer of the general formula (A-COO)ₘB, wherein m is an integer of at least 2, A is a polymeric component having a molecular weight of at least 500 and is the residue of an oil-soluble complex mono-carboxylic acid of the general structural formula:
R-CO-[O-CHR₁-(R₂)ₙ-CO]ₚ-O-CHR₁-(R₂)ₙ-COOH (I)
in which R is hydrogen or a monovalent hydrocarbon or substituted hydrocarbon group; R₁ is hydrogen or a monovalent C₁ to C₂₄ hydrocarbon group; R₂ is a divalent C₁ to C₂₄ hydrocarbon group; n is zero or 1; and p is zero or an integer from zero up to 200; and B is a polymeric component having a molecular weight of at least 500 and, in the case where m is 2, is the divalent residue of a water-soluble polyalkylene glycol of the general formula:
H-[O-CHR₃-CH₂]_{q}-O-CHR₃-CH₂OH (II)
in which R₃ is hydrogen or a C₁ to C₃ alkyl group, q is an integer from 10 to 500, or, in the case where m is greater than 2, is the residue of valency m of a water-soluble polyether polyol of the general formula:
R₄{[O-CHR₃-CH₂]ᵣ-OH}ₘ (III)
in which R₃ and m have their previous significance, r is zero or an integer from 1 to 500, provided that the total number of:
-O-CHR₃-CH₂₋
units in the molecule is at least 10, and R₄ is the residue of an organic compound containing in the molecule m hydrogen atoms reactive with an alkylene oxide; and (ii) a second polymeric emulsifier that is a graft copolymer of a polyvinylpyrrolidone polymer and an alpha olefin selected from the group consisting of C₁₄ to C₂₀ alphaolefins and mixtures thereof and wherein structural units derived from vinylpyrrolidone are present in the graft copolymer in an amount in the range of 40 to 60 mole%.

2. A drilling mud as claimed in Claim 1 wherein the first polymeric emulsifier is a block or graft copolymer in which m in formula (I) has a value of 2, the water-soluble polyalkylene glycol from which the polymeric component B is derived is a polyethylene glycol of molecular weight in the range of 8000 to 12000, and the copolymer contains from 20 to 50% by weight, especially from 30 to 45% by weight, of the polyethylene glycol-derived polymeric component B.

3. A drilling mud as claimed in Claims 1 or 2 wherein the second polymeric emulsifier is a graft copolymer of a polyvinyl pyrrolidone and hexadec-1-ene, the mole% of structural units derived from vinylpyrrolidone in the second polymeric emulsifier is in the range of 45 to 55 mole% and the molecular weight of the second polymeric emulsifier is in the range of 3000 to 10,000.

4. A drilling mud as claimed in any one of the preceding claims wherein the concentration of the first polymeric emulsifier in the water-in-oil emulsion is in the range of from 0.1 to 10% by weight based on the combined oil and aqueous phases of the emulsion and the concentration of the second polymeric emulsifier in the water-in-oil emulsion is in the range of 0.1 to 10% by weight based on the combined oil and aqueous phases of the emulsion.

5. A drilling mud as claimed in any one of the preceding claims wherein the weight ratio of first polymeric emulsifier to second polymeric emulsifier in the water-in-oil emulsion is in the range of 10:1 to 1:3, preferably 8:1 to 1:1.

6. A drilling mud as claimed in any one of the preceding claims wherein the brine phase is dispersed in the continuous oil phase of the emulsion in an amount of from 10 to 60% by volume, preferably 20 to 50% by volume, based on the total volume of the aqueous and oil phases.

7. A drilling mud as claimed in any one of the preceding claims wherein the dispersed brine phase of the emulsion is a synthetic brine containing one or more salts selected from the group consisting of alkali metal halides, alkali metal carbonates, alkali metal sulphates, alkali metal formates, alkali metal acetates, alkali metal phosphates, alkali metal silicates, alkaline earth metal halides, and zinc halides and the salt is present in the synthetic brine at a concentration of at least 5% by weight, preferably, at least 10% by weight, in particular, at least 15% by weight and up to saturation.

8. A drilling mud as claimed in any one of the preceding claims additionally comprising additives selected from bridging particulate materials; wetting agents; deflocculants; clays; organoclay or polymeric viscosifiers; filtration reducers such as lignite derivatives, asphalts, asphaltites such as gilsonite or polymers dissolved or colloidally dispersed in the continuous oil phase of the emulsion; weighting agents such as finely divided barium sulfate (barite), calcium carbonate (calcite), the mixed carbonate of calcium and magnesium (dolomite), hematite, haussmanite, and mixtures thereof; and lubricating additives.

9. A drilling mud as claimed in Claim 8 wherein the bridging particulate material is selected from the group consisting of particles of calcium carbonate, magnesium carbonate, mixed carbonates of calcium and magnesium, sized salt, melamine, lithium carbonate, magnesium sulfite and lithium phosphate.

10. A method of carrying out a wellbore operation, which includes the steps of:
(a) drilling a wellbore through a hydrocarbon bearing reservoir using a drilling mud as claimed in any one of Claim 1 to 9 wherein the pressure of the drilling mud in the wellbore exceeds the reservoir pressure such that a filter-cake deposits from the drilling mud onto the wall of the wellbore; and
(b) after completing drilling of the wellbore, bringing an aqueous fluid into contact with the filter-cake, said aqueous fluid having a dissolved salt concentration which is the same or lower than the dissolved salt concentration of the dispersed brine phase of the emulsion that forms the base fluid of the drilling mud,

11. A method as claimed in claim 10 wherein the dissolved salt concentration of the dispersed brine phase of the emulsion that forms the base fluid of the drilling mud employed in step (a) is at least 10% by weight, and the aqueous fluid employed in step (b) is a lower salinity aqueous fluid having a dissolved salt concentration that is at least 4% by weight lower than the dissolved salt concentration of the dispersed brine phase of the emulsion.

12. A method as claimed in claim 11 wherein after drilling of the wellbore has been completed in step (a) and a filter-cake has formed and before bringing the lower salinity aqueous fluid into contact with the filter-cake in step (b), the drilling mud is displaced by a completion fluid having a dissolved salt concentration that is at least 2% by weight higher than the dissolved salt concentration of the dispersed brine phase of the drilling mud and thereafter installing well-completion equipment in the wellbore.

13. A method as claimed in Claims 11 or 12 wherein the lower salinity aqueous fluid used in step (b) is selected from fresh water, an aqueous brine, and an oil-in-water emulsion.

14. A method as claimed in any one of Claims 11 to 13 wherein the lower salinity aqueous fluid used in step (b) is injected into the wellbore or is water that is produced from a rock formation that is penetrated by the wellbore.

15. A method as claimed in any one of claims 11 to 14 wherein the concentration of salt(s) in the dispersed brine phase of the oil-in-water emulsion is at least twice, preferably at least four times, the concentration of salts in the lower salinity aqueous fluid used in step (b).

## Patentansprüche

1. Bohrschlamm, umfassend eine Basisflüssigkeit in Form einer Wasser-in-Öl-Emulsion, umfassend Tröpfchen einer Solephase, dispergiert in einer kontinuierlichen Ölphase, wobei die Solephase eine Konzentration an gelöstem Salz von mindestens 2,5 Gew.-% hat und die Emulsion mit (i) einem ersten polymeren Emulgator, der ein Block- oder Pfropfcopolymer der allgemeinen Formel (A-COO)ₘB ist, wobei m eine ganze Zahl von mindestens 2 ist, A eine polymere Komponente mit einem Molekulargewicht von mindestens 500 ist und der Rest einer öllöslichen komplexen Monocarbonsäure der allgemeinen Strukturformel:
R-CO-[O-CHR₁-(R₂)ₙ-CO]ₚ-O-CHR₁-(R₂)ₙ-COOH (I)
ist,
in der R Wasserstoff oder eine einwertige Kohlenwasserstoff- oder substituierte Kohlenwasserstoffgruppe ist; R₁ Wasserstoff oder eine einwertige C₁- bis C₂₄-Kohlenwasserstoffgruppe ist; R₂ eine zweiwertige C₁- bis C₂₄-Kohlenwasserstoffgruppe ist; n null oder 1 ist und p null oder eine ganze Zahl von null bis zu 200 ist; und B eine polymere Komponente mit einem Molekulargewicht von mindestens 500 ist und, wenn m 2 ist, der zweiwertige Rest eines wasserlöslichen Polyalkylenglycols der allgemeinen Formel:
H-[O-CHR₃-CH₂]_{q}-O-CHR₃-CH₂OH (II)
ist,
in der R₃ Wasserstoff oder eine C₁- bis C₃-Alkylgruppe ist, q eine ganze Zahl von 10 bis 500 ist, oder, wenn m größer als 2 ist, der Rest der Wertigkeit m eines wasserlöslichen Polyetherpolyols der allgemeinen Formel:
R₄{[O-CHR₃-CH₂]ᵣ-OH}ₘ (III)
ist,
in der R₃ und m ihre vorherige Bedeutung haben, r null oder eine ganze Zahl von 1 bis 500 ist, mit der Maßgabe, dass die Gesamtanzahl der:
-O-CHR₃-CH₂-
Einheiten in dem Molekül mindestens 10 beträgt, und R₄ der Rest einer organischen Verbindung ist, die in dem Molekül m Wasserstoffatome enthält, die mit einem Alkylenoxid reaktiv sind; und
(ii) einem zweiten polymeren Emulgator, der ein Pfropfcopolymer eines Polyvinylpyrrolidon-polymers und eines Alpha-Olefins, ausgewählt aus der Gruppe, bestehend aus C₁₄- bis C₂₀-Alpha-Olefinen und Gemischen davon, ist und wobei strukturelle Einheiten, die von Vinyl-pyrrolidon abgeleitet sind, in dem Pfropfcopolymer in einer Menge im Bereich von 40 bis 60 Mol-% vorliegen, stabilisiert wird.

2. Bohrschlamm nach Anspruch 1, wobei der erste polymere Emulgator ein Block- oder Pfropfcopolymer ist, in dem m in Formel (I) einen Wert von 2 hat, das wasserlösliche Polyalkylenglycol, von dem die polymere Komponente B abgeleitet ist, ein Polyethylenglycol mit einem Molekulargewicht im Bereich von 8000 bis 12000 ist und das Copolymer 20 bis 50 Gew.-%, insbesondere 30 bis 45 Gew.-%, der von Polyethylenglycol abgeleiteten polymeren Komponente B enthält.

3. Bohrschlamm nach den Ansprüchen 1 oder 2, wobei der zweite polymere Emulgator ein Pfropfcopolymer aus einem Polyvinylpyrrolidon und Hexadec-1-en ist, die Mol-% der strukturellen Einheiten, die von Vinylpyrrolidon abgeleitet sind, in dem zweiten polymeren Emulgator im Bereich von 45 bis 55 Mol-% liegen und das Molekulargewicht des zweiten polymeren Emulgators im Bereich von 3000 bis 10.000 liegt.

4. Bohrschlamm nach einem der vorstehenden Ansprüche, wobei die Konzentration des ersten polymeren Emulgators in der Wasser-in-Öl-Emulsion im Bereich von 0,1 bis 10 Gew.-%, basierend auf der vereinigten Öl- und wässerigen Phase der Emulsion, liegt und die Konzentration des zweiten polymeren Emulgators in der Wasser-in-Öl-Emulsion im Bereich von 0,1 bis 10 Gew.-%, basierend auf der vereinigten Öl- und wässerigen Phase der Emulsion, liegt.

5. Bohrschlamm nach einem der vorstehenden Ansprüche, wobei das Gewichtsverhältnis von erstem polymerem Emulgator zu zweitem polymerem Emulgator in der Wasser-in-Öl-Emulsion im Bereich von 10 : 1 bis 1 : 3, vorzugsweise 8 : 1 bis 1 : 1 liegt.

6. Bohrschlamm nach einem der vorstehenden Ansprüche, wobei die Solephase in der kontinuierlichen Ölphase der Emulsion in einer Menge von 10 bis 60 Vol.-%, vorzugsweise 20 bis 50 Vol.-%, basierend auf dem Gesamtvolumen der wässerigen und Ölphase, dispergiert ist.

7. Bohrschlamm nach einem der vorstehenden Ansprüche, wobei die dispergierte Solephase der Emulsion eine synthetische Sole, enthaltend ein oder mehrere Salze, ausgewählt aus der Gruppe, bestehend aus Alkalimetallhalogeniden, Alkalimetallcarbonaten, Alkalimetallsulfaten, Alkalimetallformiaten, Alkalimetallacetaten, Alkalimetallphosphaten, Alkalimetallsilicaten, Erdalkalimetallhalogeniden und Zinkhalogeniden, ist und das Salz in der synthetischen Sole bei einer Konzentration von mindestens 5 Gew.-%, vorzugsweise mindestens 10 Gew.-%, insbesondere mindestens 15 Gew.-% und bis zur Sättigung vorliegt.

8. Bohrschlamm nach einem der vorstehenden Ansprüche, außerdem umfassend Additive, ausgewählt aus brückenbildenden partikulären Materialien; Benetzungsmitteln; Dispergiermitteln; Tonen; Organoton oder polymeren Verdickungsmitteln; die Filtration reduzierenden Mitteln wie Lignitderivaten, Asphalten, Asphaltiten wie Gilsonit oder Polymeren, gelöst oder kolloidal dispergiert in der kontinuierlichen Ölphase der Emulsion; Beschwerungsmitteln wie fein verteiltem Bariumsulfat (Baryt), Calciumcarbonat (Calcit), dem Mischcarbonat aus Calcium und Magnesium (Dolomit), Hämatit, Hausmannit und Gemischen davon; und Schmieradditive.

9. Bohrschlamm nach Anspruch 8, wobei das brückenbildende partikuläre Material aus der Gruppe ausgewählt ist, bestehend aus Teilchen von Calciumcarbonat, Magnesiumcarbonat, Mischcarbonaten von Calcium und Magnesium, klassiertem Salz, Melamin, Lithiumcarbonat, Magnesiumsulfit und Lithiumphosphat.

10. Verfahren zur Durchführung eines Bohrvorgangs, welches die Schritte umfasst:
(a) Bohren eines Bohrlochs durch eine Kohlenwasserstoff tragende Lagerstätte unter Verwendung eines Bohrschlamms nach einem der Ansprüche 1 bis 9, wobei der Druck des Bohrschlamms in dem Bohrloch den Lagerstättendruck derart übersteigt, dass sich ein Filterkuchen aus dem Bohrschlamm an der Wand des Bohrlochs absetzt; und
(b) nach dem Beenden des Bohrens des Bohrlochs, das in Kontakt bringen eines wässerigen Fluids mit dem Filterkuchen, wobei das wässerige Fluid eine Konzentration an gelöstem Salz aufweist, die dieselbe oder eine geringere als die Konzentration an gelöstem Salz der dispergierten Solephase der Emulsion ist, die die Basisflüssigkeit des Bohrschlamms bildet.

11. Verfahren nach Anspruch 10, wobei die Konzentration an gelöstem Salz der dispergierten Solephase der Emulsion, die die Basisflüssigkeit des in Schritt (a) eingesetzten Bohrschlamms bildet, mindestens 10 Gew.-% beträgt und das in Schritt (b) eingesetzte wässerige Fluid ein wässeriges Fluid mit einem geringeren Salzgehalt ist, das eine Konzentration an gelöstem Salz aufweist, die mindestens 4 Gew.-% geringer als die Konzentration an gelöstem Salz der dispergierten Solephase der Emulsion ist.

12. Verfahren nach Anspruch 11, wobei, nachdem das Bohren des Bohrlochs in Schritt (a) beendet wurde und sich ein Filterkuchen gebildet hat und bevor das wässerige Fluid mit geringerem Salzgehalt mit dem Filterkuchen in Schritt (b) in Kontakt gebracht wurde, der Bohrschlamm durch ein Komplettierungsfluid ersetzt wird, das eine Konzentration an gelöstem Salz aufweist, die mindestens 2 Gew.-% höher als die Konzentration an gelöstem Salz der dispergierten Solephase des Bohrschlamms ist, und danach Bohrlochkomplettierungsausrüstung in dem Bohrloch installiert wird.

13. Verfahren nach den Ansprüche 11 oder 12, wobei das in Schritt (b) verwendete wässerige Fluid mit geringerem Salzgehalt aus Frischwasser, einer wässerigen Salzlösung und einer Ölin-Wasser-Emulsion ausgewählt ist.

14. Verfahren nach einem der Ansprüche 11 bis 13, wobei das in Schritt (b) verwendete wässerige Fluid mit geringerem Salzgehalt in das Bohrloch injiziert wird oder Wasser ist, das aus einer Gesteinsformation erzeugt wird, die von dem Bohrloch durchdrungen wird.

15. Verfahren nach einem der Ansprüche 11 bis 14, wobei die Konzentration an Salz(en) in der dispergierten Solephase der Öl-in-Wasser-Emulsion mindestens das Zweifache, vorzugsweise mindestens das Vierfache der Konzentration an Salzen in dem in Schritt (b) verwendeten wässerigen Fluid mit geringerem Salzgehalt beträgt.

## Revendications

1. Boue de forage comprenant un fluide de base sous la forme d'une émulsion eau dans l'huile comprenant des gouttelettes d'une phase de saumure dispersées dans une phase huileuse continue, dans laquelle la phase de saumure a une concentration de sel dissous d'au moins 2,5 % en poids et l'émulsion est stabilisée avec (i) un premier émulsionnant polymère qui est un copolymère séquencé ou greffé de formule générale (A-COO)ₘB dans laquelle m est un entier valant au moins 2, A est un composant polymère ayant une masse moléculaire d'au moins 500 et est le résidu d'un acide monocarboxylique complexe soluble dans l'eau de formule structurelle générale :
R-CO-[O-CHR₁-(R₂)ₙ-CO]ₚ-O-CHR₁-(R₂)ₙ-COOH (I)
dans laquelle R est l'hydrogène ou un groupe hydrocarboné monovalent ou hydrocarboné substitué ; R₁ est l'hydrogène ou un groupe hydrocarboné monovalent en C₁ à C₂₄ ; R₂ est un groupe hydrocarboné divalent en C₁ à C₂₄ ; n vaut zéro ou 1 ; et p vaut zéro ou est un entier de zéro à 200 ;
et B est un composant polymère ayant une masse moléculaire d'au moins 500 et, dans le cas où m vaut 2, est le résidu divalent d'un polyalkylèneglycol soluble dans l'eau de formule générale :
H-[O-CHR₃-CH₂]_{q}-O-CHR₃-CH₂OH (II)
dans laquelle R₃ est l'hydrogène ou un groupe alkyle en C₁ à C₃, q est un entier de 10 à 500,
ou, dans le cas où m est supérieur à 2, est le résidu de valence m d'un polyéther-polyol soluble dans l'eau de formule générale :
R₄{[O-CHR₃-CH₂]ᵣ-OH}ₘ (III)
dans laquelle R₃ et m ont la même signification que précédemment, r vaut zéro ou est un entier de 1 à 500, sous réserve que le nombre total de motifs :
-O-CHR₃-CH₂
dans la molécule soit d'au moins 10, et R₄ est le résidu d'un composé organique contenant dans sa molécule m atomes d'hydrogène réactifs vis-à-vis d'un oxyde d'alkylène ; et
(ii) un deuxième émulsionnant polymère qui est un copolymère greffé d'un polymère de polyvinylpyrrolidone et d'une α-oléfine choisie dans l'ensemble constitué par les α-oléfines en C₁₄ à C₂₀ et leurs mélanges, dans lequel les motifs structurels dérivés de vinylpyrrolidone sont présents dans le polymère de greffage en une quantité située dans la plage allant de 40 à 60 % en moles.

2. Boue de forage selon la revendication 1, dans laquelle le premier émulsionnant polymère est un copolymère séquencé ou greffé dans lequel m dans la formule (I) vaut 2, le polyalkylèneglycol soluble dans l'eau d'où dérive le composant polymère B est un polyéthylèneglycol ayant une masse moléculaire située dans la plage allant de 8000 à 12000, et le copolymère contient de 20 à 50 % en poids, en particulier de 30 à 45 % en poids, du composant polymère dérivé de polyéthylèneglycol B.

3. Boue de forage selon la revendication 1 ou 2, dans laquelle le deuxième émulsionnant polymère est un copolymère greffé d'une polyvinylpyrrolidone et d'hexadéc-1-ène, le pourcentage en moles de motifs structurels dérivés de vinylpyrrolidone dans le deuxième émulsionnant polymère est situé dans la plage allant de 45 à 55 % en moles, et la masse moléculaire du deuxième émulsionnant polymère est situé dans la plage allant de 3000 à 10000.

4. Boue de forage selon l'une quelconque des revendications précédentes, dans laquelle la concentration du premier émulsionnant polymère dans l'émulsion eau dans l'huile est située dans la plage allant de 0,1 à 10 % en poids par rapport aux phases huileuse et aqueuse combinées de l'émulsion, et la concentration du deuxième émulsionnant polymère dans l'émulsion eau dans l'huile est située dans la plage allant de 0,1 à 10 % en poids par rapport aux phases huileuse et aqueuse combinées de l'émulsion.

5. Boue de forage selon l'une quelconque des revendications précédentes, dans laquelle le rapport en poids du premier émulsionnant polymère au deuxième émulsionnant polymère dans l'émulsion eau dans l'huile est situé dans la plage allant de 10/1 à 1/3, de préférence de 8/1 à 1/1.

6. Boue de forage selon l'une quelconque des revendications précédentes, dans laquelle la phase de saumure est dispersée dans la phase huileuse continue de l'émulsion en une quantité de 10 à 60 % en volume, de préférence de 20 à 50 % en volume, par rapport au volume total des phases aqueuse et huileuse.

7. Boue de forage selon l'une quelconque des revendications précédentes, dans laquelle la phase de saumure dispersée de l'émulsion est une saumure synthétique contenant un ou plusieurs sels choisis dans l'ensemble constitué par les halogénures de métal alcalin, les carbonates de métal alcalin, les sulfates de métal alcalin, les formiates de métal alcalin, les acétates de métal alcalin, les phosphates de métal alcalin, les silicates de métal alcalin, les halogénures de métal alcalino-terreux, et les halogénures de zinc, et le sel est présent dans la saumure synthétique à une concentration d'au moins 5 % en poids, de préférence d'au moins 10 % en poids, en particulier d'au moins 15 % en poids et pouvant aller jusqu'à la saturation.

8. Boue de forage selon l'une quelconque des revendications précédentes, comprenant de plus des additifs choisis parmi les matériaux particulaires pontants ; les agents mouillants ; les défloculants ; les argiles ; les agents conférant une viscosité polymères ou de type argile organique ; les réducteurs de filtration tels que les dérivés de lignite, les asphaltes, les asphaltites telles que la gilsonite ou les polymères dissous ou dispersés en dispersion colloïdale dans la phase huileuse continue de l'émulsion ; les agents de lestage tels que le sulfate de baryum (baryte) finement divisé, le carbonate de calcium (calcite), le carbonate mixte de calcium et de magnésium (dolomite), l'hématite, l'haussmanite, et leurs mélanges ; et les additifs lubrifiants.

9. Boue de forage selon la revendication 8, dans laquelle le matériau particulaire pontant est choisi dans l'ensemble constitué par les particules de carbonate de calcium, de carbonate de magnésium, de carbonates mixtes de calcium et de magnésium, de sel tamisé, de mélamine, de carbonate de lithium, de sulfite de magnésium et de phosphate de lithium.

10. Procédé pour effectuer une opération de forage pétrolier, qui comprend les étapes consistant à :
(a) forer un trou de forage dans un réservoir d'hydrocarbures en utilisant une boue de forage selon l'une quelconque des revendications 1 à 9, la pression de la boue de forage dans le trou de forage dépassant la pression du réservoir de façon qu'un gâteau de filtration se dépose à partir de la boue de forage sur la paroi du trou de forage ; et
(b) une fois que le forage du trou de forage est terminé, porter un fluide aqueux en contact avec le gâteau de filtration, ledit fluide aqueux ayant une concentration de sel dissous qui est identique ou inférieure à la concentration de sel dissous dans la phase de saumure dispersée de l'émulsion qui forme le fluide de base de la boue de forage.

11. Procédé selon la revendication 10, dans lequel la concentration de sel dissous dans la phase de saumure dispersée de l'émulsion qui forme le fluide de base de la boue de forage employée dans l'étape (a) est d'au moins 10 % en poids, et le fluide aqueux employé dans l'étape (b) est un fluide aqueux de salinité moindre ayant une concentration de sel dissous qui est inférieure d'au moins 4 % en poids à la concentration de sel dissous dans la phase de saumure dispersée de l'émulsion.

12. Procédé selon la revendication 11, dans lequel, après que le forage du trou de forage a été effectué dans l'étape (a) et qu'un gâteau de filtration s'est formé, et avant que le fluide aqueux de moindre salinité soit porté en contact avec le gâteau de filtration dans l'étape (b), la boue de forage est déplacée par un fluide de complétion ayant une concentration de sel dissous qui est supérieure d'au moins 2 % en poids à la concentration de sel dissous dans la phase de saumure dispersée de la boue de forage, opération suivie de l'installation d'un équipement de complétion de puits dans le trou de forage.

13. Procédé selon la revendication 11 ou 12, dans lequel le fluide aqueux de moindre salinité utilisé dans l'étape (b) est choisi parmi l'eau fraîche, une saumure aqueuse, et une émulsion huile dans l'eau.

14. Procédé selon l'une quelconque des revendications 11 à 13, dans lequel le fluide aqueux de moindre salinité utilisé dans l'étape (b) est injecté dans le trou de forage ou est de l'eau qui est produite à partir d'une formation rocheuse dans laquelle le trou de forage a pénétré.

15. Procédé selon l'une quelconque des revendications 11 à 14, dans lequel la concentration du ou des sels dans la phase de saumure dispersée de l'émulsion huile dans l'eau est de préférence au moins le double, de préférence au moins le quadruple, de la concentration de sels dans le fluide aqueux de moindre salinité utilisé dans l'étape (b).
